(19) **Europäisches Patentamt / European Patent Office / Office européen des brevets**

(11) **EP 3 643 986 B1**

(12) **FASCICULE DE BREVET EUROPEEN**

(45) Date de publication et mention
de la délivrance du brevet:
**31.03.2021 Bulletin 2021/13**

(51) Int Cl.:
**F24S 40/90** (2018.01)

(21) Numéro de dépôt: **19203746.3**

(22) Date de dépôt: **17.10.2019**

(54) **PROCÉDÉ DE DÉTECTION ET DE LOCALISATION D'UN DÉFAUT DANS UN CHAMP SOLAIRE THERMIQUE**

VERFAHREN ZUR ERFASSUNG UND ORTUNG EINES DEFEKTS IN EINEM THERMISCHEN SOLARFELD

METHOD FOR DETECTING AND LOCATING A DEFECT IN A THERMAL SOLAR FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2018 FR 1859767**

(43) Date de publication de la demande:
**29.04.2020 Bulletin 2020/18**

(73) Titulaire: **Commissariat à l'Energie Atomique et aux Energies Alternatives
75015 Paris (FR)**

(72) Inventeurs:
• **VALLEE, Mathieu
38054 GRENOBLE CEDEX 09 (FR)**

• **FAURE, Gaelle
73000 CHAMBERY (FR)**
• **PAULUS, Cédric
38054 GRENOBLE CEDEX 09 (FR)**

(74) Mandataire: **Cabinet Camus Lebkiri
25 rue de Maubeuge
75009 Paris (FR)**

(56) Documents cités:
**GB-A- 2 546 564      US-A- 4 010 734
US-B2- 8 180 491**

• Ashrae: **"ANSIIASHRAE 93-1986 (RA 91) Methods of Testing to Determine the Thermal Performance of Solar Collectors", , 1 janvier 1991 (1991-01-01), XP055533818, Extrait de l'Internet: URL:https://search.library.wisc.edu/catalo g/999821471802121 [extrait le 2018-12-12]**

**Description**

## DOMAINE TECHNIQUE

La présente invention concerne un procédé pour détecter un défaut dans un champ solaire thermique et localiser ce défaut au sein des capteurs ou rangées de capteurs dudit champ solaire. L'invention concerne également un champ solaire thermique mettant en œuvre ce procédé.

L'invention trouve des applications dans le domaine des centrales solaires thermiques et notamment des champs solaires utilisés dans ces centrales. Elle trouve, en particulier, des applications dans le domaine des champs solaires de grandes dimensions utilisés pour la production d'eau chaude de réseaux de chaleur ou pour l'industrie.

## ETAT DE LA TECHNIQUE

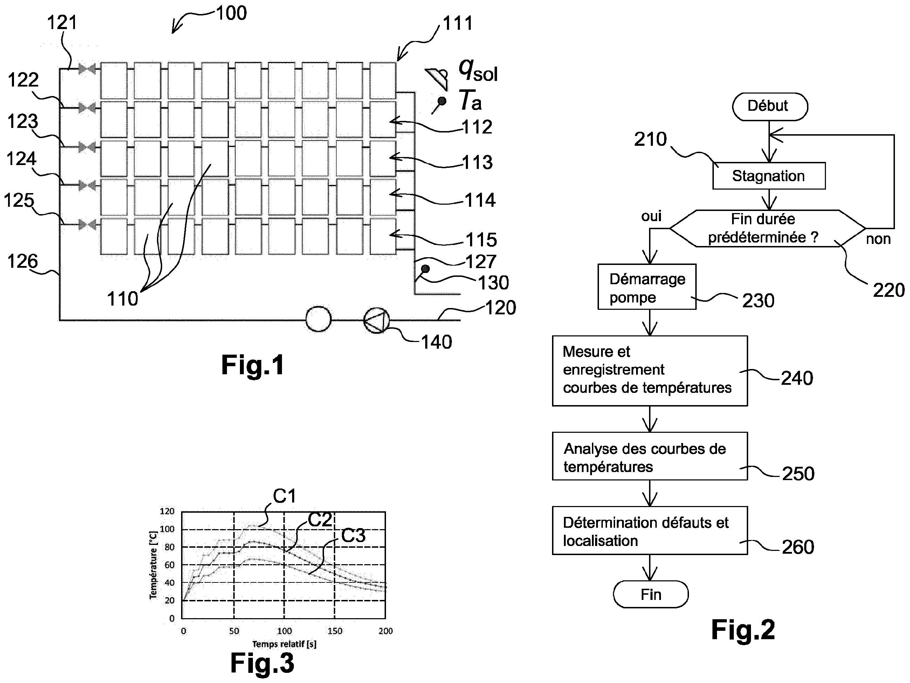

Il est connu, dans le domaine des centrales solaires thermiques, d'utiliser un champ solaire, comme celui représenté sur la figure 1, pour chauffer un fluide caloporteur. Ce champ solaire 100 comporte une canalisation 120, dans laquelle circule le fluide caloporteur, et un ensemble de capteurs solaires 110 agencés en plusieurs rangées 111-115. La canalisation 120 comporte une pluralité de conduites 121-125 en jonction hydraulique avec un canal d'alimentation 126 équipé d'une pompe d'alimentation 140 et avec un canal de sortie du fluide caloporteur 127 équipé d'un capteur de température 130. Chaque rangée 111-115 de capteurs solaires 110 est disposée de sorte à chauffer le fluide caloporteur circulant dans une des conduites 121-125.

Pour une bonne efficacité de fonctionnement de la centrale solaire thermique, le champ solaire, qui peut présenter une superficie importante, doit être le plus efficace possible et présenter une absence ou un minimum de défaut. En effet, chaque défaut, ou anomalie, induit une perte directe d'efficacité de la centrale solaire. Il en résulte donc un besoin d'outils permettant de détecter et de localiser un défaut dans le champ solaire pour la corriger en vue d'améliorer l'efficacité de la centrale solaire. Or, certains défauts, comme par exemple un défaut d'équilibrage, un défaut de captation ou un défaut de pertes thermiques, sont difficilement repérables dans le champ solaire. En particulier :

> Les défauts d'équilibrage, qui correspondent à un mauvais équilibre de circulation du fluide entre les différentes rangées de capteurs solaires, sont difficilement détectables et localisables. En effet, dans un champ solaire sans défaut, le débit du fluide est exactement le même dans toutes les rangées de capteurs, si les rangées ont la même longueur. Si une (ou plusieurs) rangée est faiblement irriguée, le défaut d'équilibrage peut causer une stagnation partielle qui risque de dégrader les capteurs solaires thermiques. Ce défaut n'est généralement détectable qu'une fois que les capteurs solaires sont très dégradés et qu'ils entrainent une baisse générale de la production solaire.

> Les défauts de captation de l'énergie solaire, qui correspondent à une diminution de la capacité à capter la chaleur du soleil pour chauffer le fluide (opacification et/ou dégradation de l'absorbeur du capteur solaire), sont généralement détectables par une baisse de production globale du champ solaire, si l'étendue et la sévérité sont importantes. Lorsque de tels défauts sont détectés, la localisation des capteurs solaires affectés par ces défauts est difficile. Si le défaut est une opacification, il faut effectuer une inspection visuelle détaillée de tous les capteurs solaires pour savoir quels capteurs solaires ont un vitrage plus opaque que la normale. Si le défaut est une dégradation de l'absorbeur du capteur solaire, il faut effectuer une inspection visuelle de l'absorbeur de chaque capteur solaire.

> Les défauts de pertes thermiques des capteurs solaires (dégradation de l'isolant, dégradation de la couverture), qui correspondent à une augmentation des pertes thermiques, sont généralement détectables par une baisse de production globale du champ solaire, si l'étendue et la sévérité sont importantes. Lorsque de tels défauts sont détectés, la localisation des capteurs solaires affectés par ces défauts est difficile. Si le défaut est une dégradation de la couverture (film téflon abimé, par exemple), il faut effectuer une inspection visuelle détaillée pour savoir quels capteurs solaires ont une couverture dégradée. Si le défaut est une dégradation de l'isolant, elle ne peut être observée qu'en inspectant l'isolation des capteurs solaires et les conduites de la canalisation.

Or, on comprend bien que détecter la présence de défauts dans un champ solaire sans pouvoir localiser ces défauts, et donc les réparer, n'a qu'un intérêt restreint.

Des techniques ont toutefois été décrites, par exemple dans les documents CN107612503 et IN201811007323, pour détecter et localiser des défauts de panneaux solaires. Ces techniques, qui utilisent une caméra infrarouge montée sur un robot ou un drone, sont dérivées des techniques de détection de défauts dans les systèmes photovoltaïques. Or, non seulement la mise en œuvre de ces techniques nécessite un outillage spécifique couteux (robot ou drone), mais en plus elle est rendue complexe par le niveau élevé des températures d'un champ solaire thermique. La détection proposée dans ce document ne permet, en outre, pas la détection de tous les défauts, et notamment des défauts d'équilibrage qui ne peuvent être observés par caméra infrarouge

Le document US4010734 montre un procédé de contrôle dans un champ solaire thermique. Le document GB2546564 montre l'utilisation de véhicules volants sans pilote et équipés de caméras thermiques pour repérer la présence d'un défaut dans le champ solaire thermique. Le document US8180491 montre l'utilisation de capteurs spécifiques pour détecter la présence d'un défaut, tels que des capteurs de température ou de fuite et ce, dans chaque panneau.

## RESUME DE L'INVENTION

Pour répondre aux problèmes évoqués ci-dessus de localisation des défauts dans un champ solaire, le demandeur propose un procédé permettant de détecter et de localiser ces défauts sans modifier le champ solaire ni ajouter d'équipement couteux à la centrale solaire thermique.

Selon un premier aspect, l'invention concerne un procédé de détection et de localisation d'un défaut dans un champ solaire thermique comportant :

- une canalisation dans laquelle circule un fluide caloporteur, la canalisation comportant une pluralité de conduites en jonction avec un canal d'alimentation équipé d'une pompe d'alimentation et un canal de sortie du fluide caloporteur équipé d'un premier capteur de température,
- un ensemble de capteurs solaires agencés en rangées, chaque rangée de capteur solaires étant disposée de sorte à chauffer le fluide caloporteur circulant dans une des conduites,
  ledit procédé comportant les opérations suivantes :

  - stagnation du fluide caloporteur à l'intérieur de chaque capteur solaire pendant une durée prédéterminée, la pompe d'alimentation étant à l'arrêt,
  - à la fin de la durée prédéterminée, démarrage de la pompe d'alimentation à un premier débit de sorte que le fluide caloporteur à l'intérieur des capteurs solaires circule jusqu'au capteur de température,
  - enregistrement, sous forme de courbes, des variations des températures du fluide caloporteur mesurées par le capteur de température,
  - analyse des courbes obtenues par comparaison desdites courbes avec une courbe de référence et détermination de l'existence d'un défaut et de sa localisation.

Ce procédé présente l'avantage de pouvoir être mis en œuvre au sein de toute centrale solaire thermique sans nécessiter l'ajout d'un quelconque équipement ou instrument. Il peut être mis en œuvre simplement en utilisant les propriétés intrinsèques du champ solaire.

De façon avantageuse, l'opération de stagnation débute au début d'une période d'ensoleillement et s'étend pendant une durée d'attente maximale au cours de laquelle le fluide caloporteur s'échauffe à l'intérieur du capteur solaire jusqu'à une température maximale, inférieure à sa température de vaporisation.

Le procédé selon l'invention peut comporter une ou plusieurs des caractéristiques suivantes :

- la durée d'attente maximale est déterminée en fonction d'une température initiale du fluide caloporteur, de la capacité thermique du capteur solaire et de données météorologiques.
- la durée d'attente maximale est déterminée en calculant l'énergie $E_{sol}$ nécessaire pour échauffer le capteur solaire jusqu'à une température maximale, la plus proche possible de sa température de vaporisation, au moyen de l'équation : $E_{sol} = \frac{C_c}{A_c \eta_0} \Delta T$, où $C_c$ est la capacité thermique d'un capteur solaire, $A_c$ est la surface hors-tout d'un capteur solaire, $\eta_0$ est le rendement optique d'un capteur solaire et $\Delta T$ est la différence entre la température maximale et la température initiale du fluide caloporteur au début de la durée d'attente, et en intégrant une courbe du rayonnement solaire reçu par le capteur solaire pour déterminer le moment où la totalité de l'énergie $E_{sol}$ a été fournie au capteur solaire.
- la durée d'attente maximale est déterminée par lecture d'un second capteur de température monté au sein d'au moins un des capteurs solaires.
- l'opération de stagnation débute à la fin d'une période d'ensoleillement et s'étend pendant une durée prédéfinie de refroidissement du fluide caloporteur à l'intérieur du capteur solaire.
- la courbe de référence est une courbe des températures relevées lors d'une précédente mise en œuvre du procédé, en l'absence de défaut.
- la courbe de référence est une courbe modélisée par calculs en fonction de paramètres intrinsèques du champ solaire thermique.

- le début de l'opération de stagnation est déterminée en fonction de données météorologiques.
- Il comporte, après détermination du défaut et de sa localisation, une opération d'augmentation du débit de la pompe d'alimentation.

Selon un second aspect, l'invention concerne un champ solaire thermique, caractérisé en ce qu'il met en œuvre le procédé de détection et de localisation d'un défaut au sein dudit champ solaire tel que défini ci-dessus.

De façon avantageuse, le champ solaire comporte au moins un second capteur de température monté au sein d'un capteur solaire.

## BREVE DESCRIPTION DES FIGURES

D'autres avantages et caractéristiques de l'invention apparaîtront à la lecture de la description, illustrée par les figures dans lesquelles :

La figure 1, déjà décrite, représente une vue schématique d'un champ solaire de centrale solaire thermique ;

La figure 2 représente un diagramme fonctionnel du procédé de l'invention ;

La figure 3 représente des exemples de courbes de températures relevées en sortie de champ solaire par un capteur de température ;

Les figures 4A, 4B et 4C représentent, respectivement, une courbe de température de référence, une courbe de température en présence d'un premier défaut et une courbe de température en présence d'un deuxième défaut, ces courbes étant relevées en sortie d'un même champ solaire ;

Les figures 5A et 5B représentent chacune un ensemble de courbes relevées en sortie d'un champ solaire, chaque courbe de la figure 5A correspondant à un premier défaut, chaque courbe de la figure 5B correspondant à un deuxième défaut ;

Les figures 6A, 6B, 6C et 6D représentent, pour un même exemple de champ solaire, un tableau de paramètres du champ solaire, des courbes d'ensoleillement et de température ambiante et des courbes de températures relevées en sortie du champ solaire.

## DESCRIPTION DETAILLEE D'AU MOINS UN MODE DE REALISATION

Un exemple de réalisation d'un procédé de détection et de localisation de défauts d'un champ solaire thermique est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

La figure 2 représente un exemple de diagramme fonctionnel du procédé de détection et de localisation des défauts d'un champ solaire thermique tel que représenté sur la figure 1. Comme indiqué précédemment, le champ solaire 100 de la figure 1 comporte une canalisation 120 formée d'une pluralité de conduites 121-125 en jonction hydraulique, d'une part, avec un canal d'alimentation 126 équipé d'une pompe à débit variable 140 et, d'autre part, avec un canal de sortie du fluide caloporteur 127 équipé d'un capteur de température 130. Le fluide caloporteur - appelé par la suite simplement fluide - peut être par exemple de l'eau ou de l'eau additionnée de glycol. Le champ solaire 100 comporte en outre un ensemble de capteurs solaires 110 connectés hydrauliquement les uns aux autres. Les capteurs solaires 110 sont organisés de façon à former des rangées de capteurs 111-115, les capteurs d'une même rangée 111-115 étant connectés entre eux par une conduite, respectivement, 121-125. La pompe à débit variable 140, appelée aussi pompe d'alimentation, assure la circulation du fluide dans les conduites 121-125 de la canalisation 120. Le capteur de température 130 assure la mesure et l'enregistrement de la température du fluide en sortie de l'ensemble des rangées de capteurs solaires.

Le procédé 200 de l'invention permet de détecter et de localiser, au moins rangée par rangée, un ou des capteurs solaires présentant des défauts comme, par exemple, les défauts d'équilibrage, les défauts de captation et les défauts de pertes thermiques. Le procédé, tel que représenté schématiquement sur la figure 2, est mis en œuvre lors d'un début ou d'une fin d'ensoleillement, comme par exemple au lever du soleil, après un passage nuageux ou à la tombée de la nuit. Ce procédé peut être mis en œuvre de façon régulière, par exemple toutes les 24 heures, toutes les semaines ou tous les mois, afin de repérer les capteurs solaires défaillants pour les réparer et maintenir une production solaire optimale.

Ce procédé 200 propose de réguler le fonctionnement de la pompe d'alimentation en fluide de manière à générer des créneaux de températures au niveau du champ solaire puis à analyser le signal produit. Pour cela, le procédé 200 comporte une opération 210 de stagnation du fluide caloporteur à l'intérieur de chaque capteur solaire pendant une durée prédéterminée. Cette opération 210 est effectuée, durant une durée prédéterminée, lorsque la pompe d'alimentation en fluide est à l'arrêt. Pour cela, l'opération de stagnation est de préférence réalisée avant ou après que la pompe d'alimentation ne soit mise en fonctionnement. L'opération de stagnation 210 peut donc être réalisée, par exemple, en début de journée, en particulier au lever du soleil, ou après un passage nuageux, notamment lorsque les données météorologiques prévoient un temps couvert pendant une partie de la journée, ou encore en fin de journée, par exemple à la tombée de la nuit. Cette opération de stagnation 210 consiste à laisser stagner le fluide à l'intérieur des capteurs solaires 110, lorsque le fluide ne circule pas dans la canalisation, afin que ledit fluide à l'intérieur des capteurs solaires 110 s'échauffe (lorsque le procédé est mis en œuvre en début de journée) ou qu'il se refroidisse (lorsque le procédé est mis en œuvre en fin de soirée ou la nuit).

A la fin de la durée prédéterminée, représentée par l'étape 220 sur la figure 2, la pompe 140 d'alimentation en fluide est démarrée de sorte que le fluide à l'intérieur des capteurs solaires 110 circule jusqu'au capteur de température 130 en sortie du champ solaire 100. Au démarrage de la pompe 140 (étape 230), le débit du fluide est choisi de sorte à être relativement faible par rapport au débit de la pompe lorsque la centrale solaire est en fonctionnement normal. Un débit faible est un débit de l'ordre d'une vingtaine de pourcent d'un débit nominal. Dans un tel exemple, un débit faible peut être de l'ordre de 0,2 m/s, qui est un débit adapté pour que le fluide présent dans différentes rangées séparées d'une distance typique de 5m atteigne le capteur de température 130 avec un délai de 25 secondes environ entre chaque rangée de capteurs 111-115. Ce débit faible correspond à 20% du débit nominal typique dans ce type d'installation, qui est d'environ 1m/s. Il correspond également au régime minimal auquel on peut en général faire fonctionner une pompe de circulation. Ainsi, le fluide contenu initialement dans les capteurs solaires 110 d'une rangée de capteurs (par exemple la rangée 111) se déplace à travers la conduite (par exemple la conduite 121) vers le canal de sortie 127, et notamment vers le capteur de température 130, et se mélange, à chaque jonction de conduites, au fluide provenant des autres rangées de capteurs.

Au fur et à mesure de la progression du fluide dans le canal de sortie 127, le capteur de température 130 mesure et enregistre, à l'étape 240, les variations de température du fluide circulant à son voisinage. L'évolution de la température du fluide provenant des capteurs solaires 110 est ainsi enregistrée sous la forme de courbes qui seront analysées à l'étape 250. En effet, au voisinage du capteur de température 130, les différences de températures dans le champ solaire 100 se manifestent par des pics de températures dont les caractéristiques dépendent de la présence ou non de défauts et de leur localisation.

Un exemple de courbes de températures relevées en sortie de champ solaire par le capteur de température 130 est représenté sur la figure 3. Dans cet exemple, l'opération de stagnation est réalisée en début de période d'ensoleillement de sorte que le fluide s'échauffe à l'intérieur des capteurs solaires 110 mais reste froid dans la canalisation et notamment dans les conduites et au voisinage du capteur de température 130. Les courbes de la figure 3 représentent la température (en ordonnée) en fonction d'un temps (en abscisse) calculé relativement au moment de redémarrage de la pompe. Les courbes C1, C2 et C3 de la figure 3 représentent ainsi les variations de température observées au niveau du capteur de température 130, après l'opération de stagnation, lorsque le fluide commence à circuler. Plus précisément, les courbes C1, C2 et C3 représentent les variations de températures pour un fluide atteignant, respectivement 105°C, 87°C et 67°C, à l'intérieur des capteurs.

Ces courbes C1, C2 et C3 montrent, d'une part, que la température du fluide augmente par pics au fur et à mesure de la circulation du fluide échauffé dans chaque rangée de capteurs et, d'autre part, que la température maximale est observée au niveau du capteur de température lorsque le fluide de tout le champ de capteurs a circulé jusqu'au capteur de température. Autrement dit, le temps d'apparition des différents pics correspond au temps de parcours du fluide qui s'est échauffé dans les différentes rangées de capteurs pendant la période d'arrêt de la pompe. En l'absence de défaut, ce temps correspond à la distance de la rangée divisée par la vitesse du fluide. Les courbes C1, C2 et C3 montrent également que la température du fluide redescend vers une température de fonctionnement au fur et à mesure que s'établit le fonctionnement nominal, pendant lequel le temps de séjour du fluide dans le capteur permet d'atteindre la température nominale de fonctionnement..

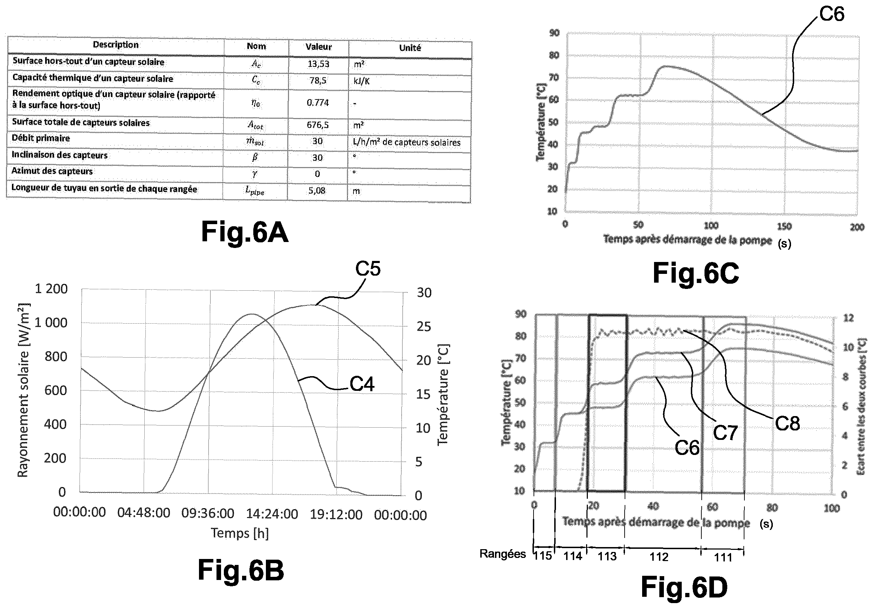

Après l'enregistrement des variations de températures du fluide, le procédé 200 comporte une opération 250 d'analyse des courbes relatives à ces variations de températures. En effet, la forme du signal obtenu au niveau du capteur de température 130, en sortie de champ solaire, résulte de la moyenne de signaux élémentaires au niveau de chaque rangée de capteurs solaires, qui découlent eux-mêmes des signaux obtenus au niveau de chaque capteur solaire. En présence d'un défaut, ces signaux présentent des particularités pouvant être analysées. L'analyse 250 du procédé de l'invention propose de comparer les courbes enregistrées à une courbe de référence. Cette courbe de référence peut être une courbe des températures relevées lors d'une précédente mise en œuvre du procédé, au cours de laquelle on suppose qu'aucun défaut n'est présent, par exemple à la mise en service de l'installation. En variante, la courbe de référence peut être une courbe modélisée par calcul en fonction des paramètres intrinsèques du champ solaire thermique qui sont des paramètres fournis par le fabriquant du champ solaire, comme ceux de l'exemple présenté dans le tableau de la figure 6A.

Cette analyse des courbes consiste :

- à repérer, sur la courbe de référence, les différents pics de températures, leurs amplitudes et le temps écoulé entre le redémarrage de la pompe et chaque pic, puis
- à détecter, sur les courbes enregistrées à l'étape 240, les différents pics et le temps écoulé entre le redémarrage de la pompe et chaque pic, et
- à comparer les données relevées sur les courbes enregistrées avec les données repérées sur la courbe de référence.

Pour cela, un mode de réalisation propose, sur la courbe de référence, de noter $t_i$ le temps correspondant au pic de la rangée i et $a_i$ l'amplitude de ce pic, les pics apparaissant dans l'ordre des rangées - depuis la rangée la plus proche 115 à la rangée la plus éloignée 111 - du capteur de température 130. En parallèle, sur les courbes enregistrées, on note $t'_i$ le temps correspondant au pic de la rangée i, et $a'_i$ l'amplitude de ce pic. On compare alors les valeurs nominales de $t_i$ et $a_i$ aux valeurs mesurées $t'_i$ et $a'_i$.

Cette comparaison des pics permet de déterminer, à l'étape 260 du procédé, s'il y a ou non présence de défauts et, en particulier, de défauts d'équilibrage et de défauts de captation. En effet, si un défaut d'équilibrage est présent, le temps d'apparition du pic est plus élevé pour la rangée ayant un débit plus faible que la normale (le débit est aussi plus fort dans les autres rangées, mais se répartit entre elles). Si un défaut de captation est présent, le temps d'apparition du pic est conservé, mais l'amplitude du pic est réduite par rapport à la normale, c'est-à-dire par rapport à la courbe de référence.

Dans un autre mode de réalisation, lorsque l'ordre d'arrivée des pics n'est pas conservé, une méthode de reconnaissance des formes peut être mise en œuvre, cette méthode consistant à déterminer une décomposition du signal observé en plusieurs signaux élémentaires dont les paramètres (notamment amplitude et temps de parcours) sont identifiés pour approcher au mieux le signal observé en sortie.

L'analyse des courbes permet non seulement de détecter la présence d'un ou de plusieurs défauts dans le champ solaire, mais elle permet simultanément de déterminer la localisation desdits défauts puisque chaque défaut est détecté, selon le défaut recherché, pour un capteur ou une rangée de capteurs.

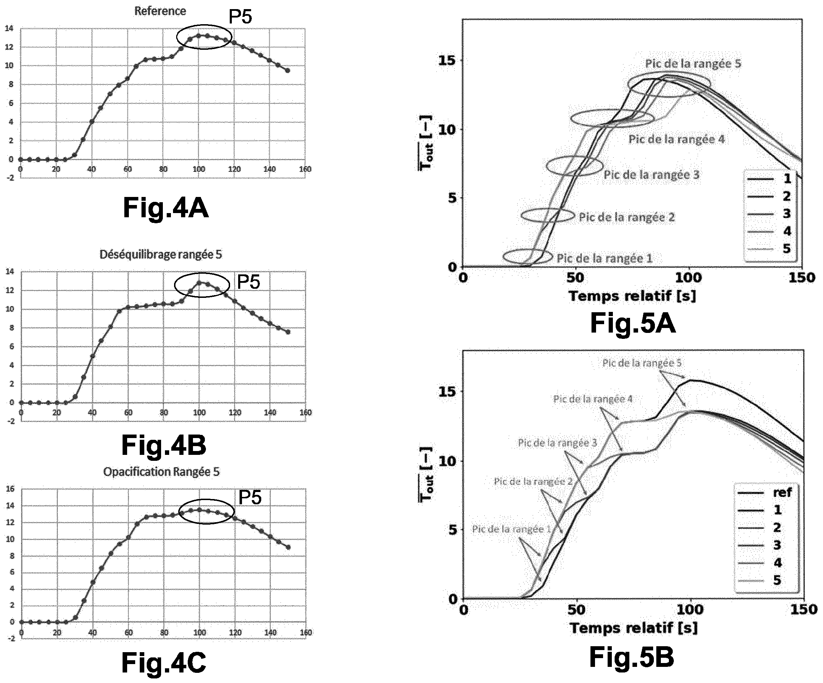

Les figures 4A, 4B et 4C montrent des exemples de courbes auxquelles l'opération d'analyse décrite ci-dessus peut être appliquée. La courbe 4A est une courbe de référence montrant les températures, en fonction d'un temps relatif, obtenues pour un fonctionnement dit normal du champ solaire, c'est-à-dire un fonctionnement lorsque le champ solaire ne comporte aucun défaut. Cette courbe de référence peut être une courbe des températures relevées avant le démarrage de la pompe d'alimentation ou une courbe modélisée par calcul en fonction des paramètres intrinsèques du champ solaire. La courbe 4C est la courbe des températures mesurées par le capteur de température 130 pour le champ solaire de la figure 4A lorsque ledit champ solaire comporte un défaut d'opacification, par exemple dans la cinquième rangée de capteurs solaires (rangée 111 sur la figure 1). La courbe 4B est la courbe des températures mesurées par le capteur de température 130 pour le champ solaire de la figure 4A lorsque ledit champ solaire comporte un défaut de déséquilibrage, par exemple dans la rangée 111 de capteurs solaires. Une comparaison des courbes 4A et 4B avec une analyse des pics desdites courbes permet de voir que le temps d'apparition du pic P5 est décalé dans le temps et que, par conséquent, il existe un défaut de déséquilibrage dans la cinquième rangée de capteurs solaires. En parallèle, une comparaison des courbes 4A et 4C avec une analyse des pics desdites courbes permet de voir que l'amplitude du pic P5 est réduite et que, par conséquent, il existe un défaut d'opacification dans la cinquième rangée de capteurs solaires.

Les figure 5A et 5B montrent des exemples de courbes obtenues pour différents cas de déséquilibrage (figure 5A) et de d'opacification (figure 5B). Dans le cas d'un déséquilibrage fluidique, les temps de parcours correspondant aux rangées affectées est modifié par rapport à la valeur de référence, c'est-à-dire la valeur correspondante sur la courbe de référence. Dans le cas d'une opacification, réchauffement du fluide est moindre dans les capteurs affectés, ce qui se traduit par une plus faible amplitude des pics correspondants. Dans les exemples des figures 5A et 5B, chacune des cinq rangées de capteurs sont affectées successivement par un défaut de déséquilibrage (figure 5A) et un défaut d'opacification (figure 5B).

Lorsque l'analyse des courbes a permis de détecter la présence de défauts et de localiser ces défauts, le procédé selon l'invention est terminé et le débit de la pompe d'alimentation 140 peut être augmenté à un débit habituel de sorte à faire fonctionner normalement le champ solaire.

Dans le procédé représenté sur la figure 2, l'opération 210 de stagnation du fluide à l'intérieur des capteurs solaires, décrite précédemment, est réalisée pendant une durée prédéterminée (étape 220). Dans certains modes de réalisation, la durée prédéterminée 220 est fixée par l'opérateur en fonction, par exemple des caractéristiques du champ solaire et des caractéristiques climatiques du lieu où est situé le champ solaire.

Dans certains autres modes de réalisation, la durée prédéterminée 200 peut être la durée maximale pendant laquelle le fluide peut s'échauffer à l'intérieur du capteur solaire sans risque de vaporisation. En effet, lorsque le fluide ne circule pas ou circule mal dans la canalisation, il peut s'échauffer et monter en température jusqu'à atteindre sa température de vaporisation, c'est-à-dire la température à laquelle il se transforme en vapeur. Si le fluide atteint sa température de vaporisation, cela peut générer un endommagement des capteurs solaires ou d'autres éléments du champ solaire. Dans le cas décrit ici, on considère que la température maximale que peut atteindre le fluide sans risque de stagnation partielle est de 100°C.

La durée maximale pendant laquelle le fluide peut s'échauffer à l'intérieur du capteur solaire et atteindre une température maximale, inférieure à sa température de vaporisation, est dépendante de la température initiale du fluide, de la capacité thermique du capteur solaire et de données météorologiques telles que la prévision d'ensoleillement et la température extérieure. La durée maximale peut, par exemple, être déterminée au début du procédé 200, avant l'opération 210 de stagnation. Dans le cas où le procédé est mis en œuvre au moment où le soleil se lève, la durée maximale peut, par exemple, être calculée en calculant tout d'abord l'énergie nécessaire $E_{sol}$ pour échauffer le capteur solaire jusqu'à une température de 100°C choisie pour éviter les phénomènes de stagnation.

Cette énergie $E_{sol}$ est déterminée de la façon suivante :

- Détermination de l'évolution de la température d'un capteur solaire en l'absence de débit, modélisée par l'équation (Eq.1) :

$$C_c \frac{dT}{dt}(t) = A_c \left[ \eta_0 q_{sol}(t) - a_1(T(t) - T_a(t)) - a_2 (T(t) - T_a(t))^2 \right] \quad (Eq.1)$$

avec $C_c$ qui est la capacité thermique d'un capteur solaire, $\eta_0$, $a_1$ et $a_2$ qui sont, respectivement, des paramètres de rendement optique et de pertes thermiques d'un capteur solaire et qui sont fournis par le fabricant de capteurs solaires.

- En négligeant, les pertes thermiques du capteur solaire, on surestime la température réelle du capteur solaire et on obtient une borne supérieure de l'énergie nécessaire. L'équation à résoudre devient :

$$C_c \frac{dT}{dt}(t) = A_c \eta_0 q_{sol}(t) \qquad (Eq.2)$$

où $A_c$ est la surface hors-tout d'un capteur solaire et $q_{sol}$ est l'ensoleillement global, en W/m2.

- En définissant $E_{sol}$ comme l'intégrale du rayonnement solaire $q_{sol}$ reçu par le capteur solaire avant qu'il n'atteigne 100°C, c'est-à-dire :

$$E_{sol} = \int_0^{t|_{T=100}} q_{sol}(t)dt \quad (Eq.3)$$

- On obtient la formule suivante :

$$E_{sol} = \frac{C_c}{A_c \eta_0} \Delta T \quad (Eq.4)$$

où $\Delta T$ est la différence entre la température maximale et la température initiale du fluide caloporteur au début de la durée d'attente.

Dans un exemple particulier, le champ solaire 100 est simulé à l'aide d'un modèle physique détaillé. Les paramètres principaux de ce champ solaire 100 - qui comporte cinq rangées 111-115 de dix capteurs solaires chacun - sont indiqués dans le tableau de la figure 6A. Ces paramètres sont fournis par le fabricant du champ solaire et donc connus de l'opérateur. Les paramètres relatifs aux conditions météorologiques, nécessaires pour calculer la durée maximale, peuvent être obtenus à partir des prévisions météorologiques, et notamment des prévisions d'ensoleillement. Selon une variante, les paramètres relatifs aux conditions météorologiques peuvent être obtenus à partir d'un profil d'ensoleillement standard, propre à un lieu et/ou une période, et considéré comme variant peu. Dans l'exemple particulier, les données météorologiques sont issues d'un logiciel météorologique, tel que Météonorm®, pour la station météorologique de Chambéry/Aix-les-bains, pour une journée particulière du mois de juin où la température extérieure au lever du soleil est de 17°C. Les conditions d'ensoleillement et de température dans le plan du champ solaire, en ce jour de juin, sont représentées sur la figure 6B. En Particulier, la courbe C4 de la figure 6B représente l'évolution de l'ensoleillement $q_{sol}$ au cours de cette journée de juin et la courbe C5 représente la température atmosphérique $T_a$ au cours de cette même journée.

Avec les données de cet exemple particulier, l'énergie $E_{sol}$ obtenue grâce aux équations citées précédemment serait : $E_{sol}$ = 622,17 kJ/m$^2$. En intégrant la courbe du rayonnement solaire reçu par les capteurs solaires, on détermine le moment où la totalité de cette énergie $E_{sol}$ a été fournie aux capteurs solaires. Dans cet exemple particulier, la durée maximale est de 6 778 secondes après le lever du soleil. Ainsi, dans cet exemple, l'opération de stagnation 210 commence au lever du soleil et dure 6 778 secondes pendant lesquelles le fluide des capteurs solaires s'échauffe. Après 6778 secondes d'échauffement, la pompe d'alimentation en fluide 140 est démarrée à un débit faible et les mesures de températures par le capteur de températures 130 peuvent commencer.

La figure 6C représente un exemple de courbe de température enregistrée par le capteur de température 130 au moment du démarrage de la pompe d'alimentation 140. La figure 6D représente cette même courbe C6 ainsi qu'une courbe de référence C7 correspondant aux températures relevées lorsque le champ solaire n'a aucun défaut et une courbe C8 correspondant à l'écart entre C6 et C7. On peut observer que les deux courbes C6 et C7 sont superposées jusqu'au train de chaleur correspondant à la troisième rangée (c'est-à-dire la rangée 113 dans l'exemple de champ solaire de la figure 1) où l'élévation de température de la courbe C6 est nettement plus faible que celle de la courbe C7. Cet écart entre les courbes C6 et C7 indique qu'il existe un défaut d'opacification dans la troisième rangée. L'écart entre les deux courbes C6 et C7 reste ensuite constant, indiquant qu'il n'y a pas de défaut sur les rangées suivantes (rangées 112 et 111 du champ solaire de la figure 1).

Dans une variante, la durée maximale d'échauffement est déterminée, non pas par calcul, mais grâce à un deuxième capteur de température monté dans un des capteurs solaires du champ solaire. Comme tous les capteurs solaires sont considérés comme s'échauffant de manière similaire, ce deuxième capteur de température peut détecter la température limite autorisée pour que ledit capteur solaire n'entre pas en stagnation partielle. Dans cette variante, l'opération 210 de stagnation est donc arrêtée lorsque le deuxième capteur de température détecte cette température limite.

Dans l'exemple particulier décrit ci-dessus, le procédé est mis en œuvre au lever du soleil. Dans d'autres exemples et variantes, le procédé peut être mis en œuvre à d'autres moments de la journée, notamment lorsque l'ensoleillement n'est pas suffisant le matin. Les prédictions météorologiques peuvent, par exemple, être utilisées pour connaitre le meilleur moment de la journée pour mettre en œuvre le procédé, par exemple pour déterminer le moment où la couverture nuageuse se dissipera.

Dans d'autres modes de réalisation, le procédé est mis en œuvre en fin de journée ou la nuit pour laisser s'évacuer des capteurs solaires la chaleur du fluide chaud. Le fluide chaud peut être celui produit par les capteurs solaires en fin de journée ou un fluide stocké durant la journée ou encore un fluide produit par un générateur d'appoint. Le fluide chaud est ainsi fourni de façon homogène à tous les capteurs solaires du champ solaire. L'opération de stagnation 210 permet ensuite de laisser s'évacuer la chaleur hors du champ solaire, cette dernière s'évacuant plus rapidement dans les capteurs solaires présentant des défauts de pertes thermiques. Après une durée prédéterminée, la pompe d'alimentation 140 est mise en marche à un premier débit, plus faible que le débit normal de fonctionnement de la pompe d'alimentation, et les variations de température sont relevées par le capteur de température 130. Les courbes correspondant à ces variations de température sont ensuite analysées, par comparaison à une courbe de référence, comme expliqué précédemment. Ce mode de réalisation permet de déterminer et de localiser principalement les défauts de pertes thermiques du champ solaire.

Bien que décrit à travers un certain nombre d'exemples, variantes et modes de réalisation, le procédé de détection et de localisation de défauts dans un champ solaire selon l'invention comprend divers variantes, modifications et perfectionnements qui apparaîtront de façon évidente à l'homme du métier, étant entendu que ces variantes, modifications et perfectionnements font partie de la portée de l'invention.

## Revendications

**1.** Procédé de détection et de localisation d'un défaut dans un champ solaire thermique (100) comportant :

- une canalisation (120) dans laquelle circule un fluide caloporteur, la canalisation comportant une pluralité de conduites (121-125) en jonction avec un canal d'alimentation (126) équipé d'une pompe d'alimentation (140) et un canal de sortie (127) du fluide caloporteur équipé d'un premier capteur de température (130),
- un ensemble de capteurs solaires (110) agencés en rangées (111-115), chaque rangée de capteurs solaires étant disposée de sorte à chauffer le fluide caloporteur circulant dans une des conduites,

ledit procédé comportant les opérations suivantes :

- stagnation (210) du fluide caloporteur à l'intérieur de chaque capteur solaire (110) pendant une durée prédéterminée, la pompe d'alimentation (140) étant à l'arrêt,
- à la fin de la durée prédéterminée, démarrage (230) de la pompe d'alimentation (140) à un premier débit de sorte que le fluide caloporteur à l'intérieur des capteurs solaires circule jusqu'au capteur de température (130),
- enregistrement (240), sous forme de courbes, des variations de température du fluide caloporteur mesurées par le capteur de température (130), et
- analyse (250) des courbes obtenues par comparaison desdites courbes avec une courbe de référence et détermination (260) de l'existence d'un défaut et de sa localisation.

2. Procédé selon la revendication 1, **caractérisé en ce que** l'opération de stagnation (210) débute au début d'une période d'ensoleillement et s'étend pendant une durée d'attente maximale au cours de laquelle le fluide caloporteur s'échauffe à l'intérieur du capteur solaire (110) jusqu'à une température maximale, inférieure à sa température de vaporisation.

3. Procédé selon la revendication 2, **caractérisé en ce que** la durée d'attente maximale est déterminée en fonction d'une température initiale du fluide caloporteur, de la capacité thermique du capteur solaire et de données météorologiques.

4. Procédé selon la revendication 2 ou 3, **caractérisé en ce que** la durée d'attente maximale est déterminée :

- en calculant l'énergie $E_{sol}$ nécessaire pour échauffer le capteur solaire jusqu'à une température maximale, la plus proche possible de sa température de vaporisation, au moyen de l'équation :

$$E_{sol} = \frac{C_c}{A_c \eta_0} \Delta T$$

où $C_c$ est la capacité thermique d'un capteur solaire, $A_c$ est la surface hors-tout d'un capteur solaire, $\eta_0$ est le rendement optique d'un capteur solaire et $\Delta T$ est la différence entre la température maximale et la température initiale du fluide caloporteur au début de la durée d'attente, et
- en intégrant une courbe du rayonnement solaire reçu par le capteur solaire pour déterminer le moment où la totalité de l'énergie $E_{sol}$ a été fournie au capteur solaire.

5. Procédé selon la revendication 2 ou 3, **caractérisé en ce que** la durée d'attente maximale est déterminée par lecture d'un second capteur de température monté au sein d'au moins un des capteurs solaires.

6. Procédé selon la revendication 1, **caractérisé en ce que** l'opération de stagnation (210) débute à la fin d'une période d'ensoleillement ou la nuit et s'étend pendant une durée prédéfinie de refroidissement du fluide caloporteur à l'intérieur du capteur solaire.

7. Procédé selon l'une quelconque des revendications 1 à 6, **caractérisé en ce que** la courbe de référence est une courbe des températures relevées lors d'une précédente mise en œuvre du procédé, en l'absence de défaut.

8. Procédé selon l'une quelconque des revendications 1 à 6, **caractérisé en ce que** la courbe de référence est une courbe modélisée par calculs en fonction de paramètres intrinsèques du champ solaire thermique.

9. Procédé selon l'une quelconque des revendications 2 à 8, **caractérisé en ce que** le début de l'opération de stagnation (210) est déterminée en fonction de données météorologiques.

10. Procédé selon l'une quelconque des revendications 1 à 9, **caractérisé en ce qu'**il comporte, après détermination du défaut et de sa localisation, une opération d'augmentation du débit de la pompe d'alimentation.

11. Champ solaire thermique, **caractérisé en ce qu'**il met en œuvre le procédé de détection et de localisation d'un défaut selon l'une quelconque des revendications 1 à 10.

12. Champ solaire selon la revendication 11, **caractérisé en ce qu'**il comporte au moins un second capteur de température monté au sein d'un capteur solaire.

**Patentansprüche**

1. Detektions- und Lokalisierungsverfahren eines Fehlers in einem thermischen Solarfeld (100), umfassend:

   - eine Kanalisation (120), in der eine Wärmeträgerflüssigkeit zirkuliert, wobei die Kanalisation eine Vielzahl von Leitungen (121-125) in einer Verzweigung mit einem Versorgungskanal (126) umfasst, der mit einer Versorgungspumpe (140) ausgerüstet ist, und einem Ausgangskanal (127) der Wärmeträgerflüssigkeit, der mit einem ersten Temperatursensor (130) ausgerüstet ist,
   - eine Gruppe von Solarsensoren (110), die in Reihen (111-115) angeordnet sind, wobei jede Reihe von Solarsensoren derart angeordnet ist, dass die Wärmeträgerflüssigkeit in einer der Leitungen zirkuliert,

   wobei das genannte Verfahren die folgenden Operationen umfasst:

   - Stagnation (210) der Wärmeträgerflüssigkeit im Innern jedes Solarsensors (110) während einer vorbestimmten Dauer, wobei die Versorgungspumpe (140) abgeschaltet ist,
   - nach Beendigung der vorbestimmten Dauer Anfahren (230) der Versorgungspumpe (140) mit einem ersten Durchsatz derart, dass die Wärmeträgerflüssigkeit im Innern der Solarsensoren bis zum Temperatursensor (130) zirkuliert,
   - Aufzeichnen (240) der Temperaturschwankungen der Wärmeträgerflüssigkeit in Form von Kurven, die vom Temperatursensor (130) gemessen werden, und
   - Analyse (250) der Kurven, die per Vergleich der genannten Kurven mit einer Referenzkurve erhalten werden und Bestimmung (260) des Vorhandenseins eines Fehlers und dessen Lokalisierung.

2. Verfahren gemäß Anspruch 1, **dadurch gekennzeichnet, dass** die Stagnationsoperation (210) zu Beginn einer Sonneneinstrahlungsperiode beginnt und sich über eine maximale Wartedauer erstreckt, in deren Verlauf sich die Wärmeträgerflüssigkeit im Innern des Sonnensensors (100) bis zu einer maximalen Temperatur erwärmt, die niedriger ist als die Verdampfungstemperatur.

3. Verfahren gemäß Anspruch 2, **dadurch gekennzeichnet, dass** die maximale Wartedauer in Abhängigkeit von einer Anfangstemperatur der Wärmeträgerflüssigkeit, der thermischen Kapazität des Sonnensensors und den meteorologischen Daten bestimmt wird.

4. Verfahren gemäß Anspruch 2 oder 3, **dadurch gekennzeichnet, dass** die maximale Wartedauer bestimmt wird:

   - durch Berechnen der Energie $E_{sol}$, die zum Erwärmen des Sonnensensors bis zu einer maximalen Temperatur notwendig ist, so nahe wie möglich an ihrer Verdampfungstemperatur, mittels der Gleichung:

$$E_{sol} = \frac{C_c}{A_c \eta_0} \Delta T$$

   wobei $C_c$ die thermische Kapazität eines Sonnensensors ist, $A_c$ die Fläche über alles eines Sonnensensors ist, $\eta_0$ die optische Leistung eines Sonnensensors ist und $\Delta T$ die Differenz zwischen der maximalen Temperatur und der Anfangstemperatur der Wärmeträgerflüssigkeit zu Beginn der Wartedauer ist und
   - durch Integrieren einer Kurve der Sonneneinstrahlung, die vom Sonnensensor zum Bestimmen des Moments empfangen ist, zu dem die gesamte Energie $E_{sol}$ dem Sonnensensor geliefert wurde.

5. Verfahren gemäß Anspruch 2 oder 3, **dadurch gekennzeichnet, dass** die maximale Wartedauer per Auslesen eines zweiten Temperatursensors bestimmt ist, der innerhalb wenigstens einer der Sonnensensoren montiert ist.

6. Verfahren gemäß Anspruch 1, **dadurch gekennzeichnet, dass** die Stagnationsoperation (210) bei Beendigung einer Sonneneinstrahlungsperiode oder der Nacht beginnt und sich während einer vorbestimmten Abkühlperiode der Wärmeträgerflüssigkeit im Innern des Sonnensensors erstreckt.

7. Verfahren gemäß irgendeinem der Ansprüche 1 bis 6, **dadurch gekennzeichnet, dass** die Referenzkurve eine Kurve der Temperaturen ist, die bei einer vorherigen Umsetzung des Verfahrens ohne jegliche Fehler erhoben wurden.

8. Verfahren gemäß irgendeinem der Ansprüche 1 bis 6, **dadurch gekennzeichnet, dass** die Referenzkurve eine Kurve ist, die per Berechnungen in Abhängigkeit von intrinsischen Parametern des thermischen Solarfeldes als Modell gestaltet wurde.

9. Verfahren gemäß irgendeinem der Ansprüche 2 bis 8, **dadurch gekennzeichnet, dass** der Beginn der Stagnationsoperation (210) in Abhängigkeit von meteorologischen Daten bestimmt wird.

10. Verfahren gemäß irgendeinem der Ansprüche 1 bis 9, **dadurch gekennzeichnet, dass** es nach der Bestimmung des Fehlers und dessen Lokalisierung eine Erhöhungsoperation des Durchsatzes der Versorgungspumpe umfasst.

11. Thermisches Solarfeld, **dadurch gekennzeichnet, dass** es das Detektions-und Lokalisationsverfahren gemäß irgendeinem der Ansprüche 1 bis 10 umsetzt.

12. Solarfeld gemäß Anspruch 11, **dadurch gekennzeichnet, dass** es wenigstens einen zweiten Temperatursensor umfasst, der innerhalb eines Solarsensors montiert ist.

**Claims**

1. A method for detecting and locating a fault in a thermal solar field (100) including:

   - a piping (120) into which a coolant circulates, the pipe including a plurality of conduits (121-125) in junction with a supply channel (126) fitted with a supply pump (140) and an outlet channel (127) for the coolant fitted with a first temperature sensor (130),
   - a set of solar sensors (110) arranged in rows (111-115), each row of solar sensors being disposed so as to heat the coolant circulating in one of the conduits,

   said method including the following operations of:

   - stagnating (210) of the coolant inside each solar sensor (110) for a predetermined time period, the supply pump (140) being stopped,
   - at the end of the predetermined time period, starting (230) the supply pump (140) at a first flow rate so that the coolant inside the solar sensors circulates to the temperature sensor (130),
   - recording (240), as curves, coolant temperature variations measured by the temperature sensor (130), and
   - analysing (250) obtained curves by comparing said curves with a reference curve and determining (260) the existence of a fault and its location.

2. The method according to claim 1, **characterised in that** the stagnating operation (210) begins at the beginning of a sunshine period and extends for a maximum waiting time period during which the coolant heats up inside the solar sensor (110) to a maximum temperature, lower than its vaporisation temperature.

3. The method according to claim 2, **characterised in that** the maximum waiting time period is determined as a function of an initial temperature of the coolant, the heat capacity of the solar sensor and weather data.

4. The method according to claim 2 or 3, **characterised in that** the maximum waiting time period is determined:

   - by calculating the energy $E_{sol}$ necessary to heat up the solar sensor to a maximum temperature, as close as possible of its vaporisation temperature, by means of the equation:

$$E_{sol} = \frac{C_c}{A_c \eta_0} \Delta T$$

   where $C_c$ is the heat capacity of a solar sensor, $A_c$ is the gross area of a solar sensor, $\eta_0$ is the optical efficiency of a solar sensor and $\Delta T$ is the difference between the maximum temperature and initial temperature of the coolant at the beginning of the waiting time period, and
- by integrating a curve of the solar radiation received by the solar sensor to determine the time when the whole energy $E_{sol}$ has been provided to the solar sensor.

5. The method according to claim 2 or 3, **characterised in that** the maximum waiting time period is determined by reading a second temperature sensor mounted within at least one of the solar sensors.

6. The method according to claim 1, **characterised in that** the stagnating operation (210) begins at the end of a sunshine period or at night and extends for a predefined time period for cooling the coolant inside the solar sensor.

7. The method according to any of claims 1 to 6, **characterised in that** the reference curve is a curve of temperatures collected during a previous implementation of the method, in the absence of a fault.

8. The method according to any of claims 1 to 6, **characterised in that** the reference curve is a curve modelled by calculations as a function of intrinsic parameters of the thermal solar field.

9. The method according to any of claims 2 to 8, **characterised in that** the beginning of the stagnating operation (210) is determined as a function of weather data.

10. The method according to any of claims 1 to 9, **characterised in that** it includes, after determining the fault and its location, an operation of increasing flow rate of the supply pump.

11. A thermal solar field, **characterised in that** it implements the method for detecting and locating a fault according to any of claims 1 to 10.

12. The solar field according to claim 11, **characterised in that** it includes at least one second temperature sensor mounted within a solar sensor.

**Fig.1**

**Fig.3**

**Fig.2**

EP 3 643 986 B1

**Fig.4A**

**Fig.4B**

**Fig.4C**

**Fig.5A**

**Fig.5B**

EP 3 643 986 B1

EP 3 643 986 B1

## Fig.6A

| Description | Nom | Valeur | Unité |
|---|---|---|---|
| Surface hors-tout d'un capteur solaire | $A_c$ | 13,53 | m² |
| Capacité thermique d'un capteur solaire | $C_c$ | 78,5 | kJ/K |
| Rendement optique d'un capteur solaire (rapporté à la surface hors-tout) | $\eta_0$ | 0.774 | - |
| Surface totale de capteurs solaires | $A_{tot}$ | 676,5 | m² |
| Débit primaire | $\dot{m}_{sol}$ | 30 | L/h/m² de capteurs solaires |
| Inclinaison des capteurs | $\beta$ | 30 | ° |
| Azimut des capteurs | $\gamma$ | 0 | ° |
| Longueur de tuyau en sortie de chaque rangée | $L_{pipe}$ | 5,08 | m |

## Fig.6B

Rayonnement solaire [W/m²] — Température [°C] — Temps [h]

C5, C4

## Fig.6C

Température [°C] — Temps après démarrage de la pompe (s)

C6

## Fig.6D

Température [°C] — Écart entre les deux courbes [°C] — Temps après démarrage de la pompe (s)

C8, C7, C6

111 112 113 114 115

Rangées

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 107612503
- IN 201811007323
- US 4010734 A
- GB 2546564 A
- US 8180491 B